(19) Europäisches Patentamt / European Patent Office / Office européen des brevets

(11) EP 3 237 350 B1

(12) EUROPEAN PATENT SPECIFICATION

(45) Date of publication and mention of the grant of the patent: **30.10.2019 Bulletin 2019/44**

(21) Application number: **15817307.0**

(22) Date of filing: **21.12.2015**

(51) Int Cl.:
*C03C 25/24* (2018.01) *C03C 25/26* (2018.01)
*C09J 103/02* (2006.01) *C09J 105/00* (2006.01)
*C03C 25/32* (2018.01) *C08J 5/24* (2006.01)
*D04H 1/587* (2012.01) *D04H 1/64* (2012.01)

(86) International application number: **PCT/EP2015/080758**

(87) International publication number: **WO 2016/102444 (30.06.2016 Gazette 2016/26)**

# (54) IMPROVED BINDER

VERBESSERTES BINDEMITTEL

LIANT AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2014 EP 14200256**

(43) Date of publication of application: **01.11.2017 Bulletin 2017/44**

(73) Proprietor: **Rockwool International A/S**
**2640 Hedehusene (DK)**

(72) Inventors:
- **HJELMGAARD, Thomas**
  **3480 Fredensborg (DK)**
- **NISSEN, Povl**
  **3650 Olstykke (DK)**
- **NAERUM, Lars**
  **2900 Hellerup (DK)**
- **HANSEN, Erling Lennart**
  **2830 Virum (DK)**

(74) Representative: **Letzelter, Felix Phillip**
**Meissner Bolte Patentanwälte**
**Rechtsanwälte Partnerschaft mbB**
**Widenmayerstraße 47**
**80538 München (DE)**

(56) References cited:
**WO-A1-2010/106181**
**WO-A1-2011/044490**
**WO-A1-2012/010694**
**WO-A1-2013/179323**
**WO-A2-2008/084173**
**US-A- 5 100 802**
**US-A1- 2011 101 260**
**US-A1- 2012 319 029**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the Invention

The present invention relates to an aqueous binder for mineral fibre products, a method of producing a bonded mineral fibre product using said binder, and a mineral fibre product comprising mineral fibres in contact with the cured binder.

### Background of the Invention

Mineral fibre products generally comprise man-made vitreous fibres (MMVF) such as, e.g., glass fibres, ceramic fibres, basalt fibres, slag wool, mineral wool and stone wool (rock wool), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties. WO 2008/023032 discloses urea-modified binders.

US 2011/101260 A1 relates to a sizing composition for mineral fibers, especially glass fibers or rock fibers, containing a liquid phenolic resin having a free formaldehyde content. WO 2013/179323 A1 relates to a formaldehyde-free aqueous binding composition comprising ammonium sulfamate, and to a fibrous mineral material obtained by polymerization of said composition. US 2012/319029 A1 discloses a sizing composition for insulating products based on mineral wool, in particular of glass or of rock, including at least one saccharide, at least one organic polycarboxylic acid, at least one esterification catalyst, and at least one agent capable of reducing the emissions of volatile organic compounds chosen from sulphates, sulphamates and carbonates. WO 2011/044490 A1 discloses an environmentally friendly, formaldehyde-free aqueous binder composition that includes a carbohydrate and a crosslinking agent such as citric acid. US 5100802 A describes a method for measuring the rate and extent of cure of a resin system undergoing polymerization, which entails adding at least one multifunctional fluorescent dye to the resin system undergoing polymerization. WO 2010/106181 A1 discloses an aqueous binder composition for mineral fibres comprising a sugar syrup containing a reducing sugar and having a dextrose equivalent DE of at least 50 and less than 85, a polycarboxylic acid component, an amine component, and optionally a reaction product of the polycarboxylic acid component and the amine component. WO 2012/010694 A1 relates to a bonded mineral fibre product exhibiting high fire resistance in accordance with Class A1 of Standard EN 13501-1 as well as improved punking resistance. The product comprises man-made vitreous fibres bound by a cured binder composition, the non-cured binder composition comprising a sugar component, and either a polycarboxylic acid component and an alkanolamine, or a reaction product of a polycarboxylic acid component and an alkanolamine, or a combination thereof, the amount of sugar component being within the range of 42 to 72 percent by weight, based on the total weight (dry matter) of the binder components. WO 2008/084173 A2 describes a glue composition for mineral fibres containing a phenolic resin, urea, and a cross-linking catalyst, wherein the cross-linking catalyst is a mixture of ammonium sulphamate and ammonium sulphate.

Since some of the starting materials used in the production of these binders are rather expensive chemicals, there is an ongoing need to provide formaldehyde-free binders which are economically produced and at the same time show good bonding properties for producing a bonded mineral fibre product.

A further effect in connection with previously known aqueous binder compositions from mineral fibres is that at least the majority of the starting materials used for the productions of these binders stem from fossil fuels. There is an ongoing trend of consumers to prefer products that are at least partly produced from renewable materials and there is therefore a need to provide binders for mineral wool which are at least partly produced from renewable materials.

Further, there is an ongoing need to provide binders for mineral wool which enable the production of mineral wool products having good long term mechanical properties.

**Summary of the Invention**

Accordingly, it was an object of the present invention to provide an aqueous binder composition, which is particularly suitable for bonding mineral fibres, is economically produced, shows good properties for bonding mineral fibre products and is including renewable materials as starting products for the preparation of the aqueous binder composition.

A further object of the present invention was to provide a mineral fibre product bonded with such a binder composition.

In accordance with a first aspect of the present invention, there is provided an aqueous binder composition for mineral fibres comprising:

- a component (i) in form of a glucose syrup having a DE of 60 to less than 100, in particular 60 to 99, more particular 85 to 99;
- a component (ii) in form of sulfamic acid and/or its salts, preferably ammonium sulfamate and/or N-cyclohexyl sulfamic acid and/or its salts;
- ammonia;
- hypophosphorous acid;

wherein the proportion of components (i), (ii), ammonia and hypophosphorous acid is in within the range of 0.5-15 wt.-%, in particular 1-12 wt.-%, more particular 2-10 wt.-% component (ii), based on the mass of component (i), 0.5-10 wt.-%, in particular 1-8 wt.-%, more particular 1-5 wt.-% hypophosphorous acid, based on the mass of component (i), and whereby component ammonia is preferably present in the amount of 0.1 to 5 molar equivalents of ammonia relative to the combined molar equivalents of component (ii) and hypophosphorous acid.

In accordance with a second aspect of the present invention, there is provided a method for producing a bonded mineral fibre product which comprises the steps of contacting the mineral fibres with such an aqueous binder composition and curing the binder composition.

In accordance with a third aspect of the present invention, there is provided a mineral fibre product comprising mineral fibres in contact with the cured binder composition defined above.

The present inventors have surprisingly found that it is possible to prepare a binder composition for mineral fibres that is based on the combination of a carbohydrate component in form of a glucose syrup having a DE of 60 to less than 100, in particular 60 to 99, more particular 85 to 99, and a component selected from sulfamic acid, or any salt thereof, ammonia, and hypophosphorous acid. It is highly surprising that by the combination of these components, binder compositions can be prepared which are suitable for bonding mineral fibres. These components have a comparatively low price and are easy to handle.

At the same time, the binders according to the present invention show excellent properties when used for binding mineral fibres. The mechanical strength is improved and has also an unexpected high level when subjected to ageing conditions.

An additional advantage of the binders according to the present invention is that they have a comparatively high curing speed at a low curing temperature.

The higher curing speed of the binders according to the present invention when compared to previously known binders allows the increase of the production capacity of a plant producing bonded mineral fibre products. At the same time, the low curing temperatures required for the binders according to the present invention save energy in the production process and limit the emission of volatile compounds in the production process.

As can be seen from the experimental results documented in the examples below, the aqueous binder compositions according to the present invention show excellent properties when used as a binder for mineral wool. As can further be seen in the experimental results documented in the examples below, the properties of the binders according to the present invention can be further improved by adding additional components.

Also, as can be seen from the experimental result documented in the examples below, the aqueous binder compositions according to aspects of the present invention have a considerably lower reaction loss than the reference binder A. The reaction loss achieved with binders according to aspects of the present invention is on the same level than the reaction loss for reference binders B, C and D (see examples below). However, unlike the binders according to the present invention, these reference binders B, C need a pre-reaction for the preparation of the binders.

**Description of the Preferred Embodiments**

Disclosed is an aqueous binder composition according to one or more of claims 1 to 4.

Preferably, the binders according to the present invention are formaldehyde-free.

For the purpose of the present application, the term "formaldehyde free" is defined to characterise a mineral

wool product where the emission is below 8 μg/$m^2$/h of formaldehyde from the mineral wool product, preferably below 5 μg/$m^2$/h, most preferably below 3 μg/$m^2$/h. Preferably the test is carried out in accordance with ISO 16000 for testing aldehyde emissions.

Preferably the binder composition does not contain added formaldehyde.

The binders according to the present invention can be of any pH. Preferably, the binders according to the present invention have a pH of 5.1-10, preferably a pH of 6-9. In a particular preferred embodiment, the binders according to the present invention have a pH of 5.1-6.5. In an alternative preferred embodiment, the binders according to the present invention have a pH of 7.5-9.

Component (i) of the binder

Disclosed is that component (i) is in the form of one or more carbohydrates.

Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number, DE is an abbreviation for Dextrose Equivalent and is defined as the content of reducing sugars, determined by the method specified in International Standard ISO 5377-1981 (E). This method measures reducing end groups and attaches a DE of 100 to pure dextrose and a DE of 0 to pure starch.

Disclosed is that the carbohydrate is glucose syrup with a dextrose equivalent value of DE = 60 to less than 100, such as DE = 60-99, such as DE = 85-99, such as DE = 95-99. The term "dextrose" as used in this application is defined to encompass glucose and the hydrates thereof.

Thus, the carbohydrate is having a DE value of 60 to less than 100, in particular 60 to 99, more particular 85 to 99.

Since the carbohydrates of component (i) are comparatively inexpensive compounds and are produced from renewable resources, the inclusion of high amounts of component (i) in the binder allows the production of a binder for mineral wool which is advantageous under economic aspects and at the same time allows the production of an ecological non-toxic binder.

Component (ii) of the binder

Disclosed is that component (ii) is in form of one or more compounds selected from sulfamic and/or its salts.

Sulfamic acid is a non-toxic compound having the formula

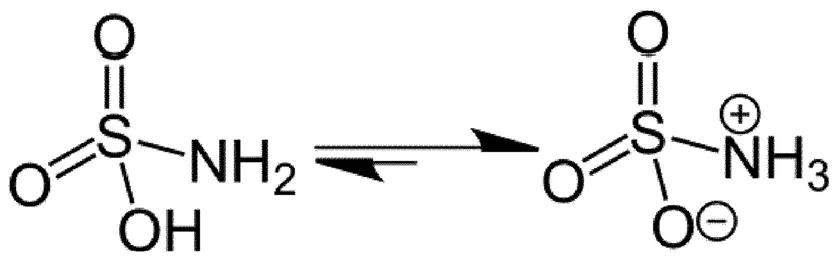

Sulfamic acid and many of its salts are storage stable non-volatile compounds and are available at a comparatively low price. In a preferred embodiment, component (ii) is selected from the group consisting of sulfamic acid and any salt thereof, such as ammonium sulfamate, calcium sulfamate, sodium sulfamate, potassium sulfamate, magnesium sulfamate, cobalt sulfamate, nickel sulfamate, sodium N-cyclohexyl sulfamate.

In a particularly preferred embodiment, component (ii) is ammonium sulfamate.

Besides providing binders which allow the production of mineral wool products having excellent mechanical properties, the inclusion of component (ii) also in general imparts improved fire resistance and anti-punking properties for aspects according to the invention.

Component (iii) of the binder

Disclosed is that the binder composition further comprises ammonia.

The ammonia may be added as an ammonium salt and/or as ammonia.

As can be seen in the experimental results reproduced in the examples below, the inclusion of component (iii) allows the further improvement of the binder according to the present invention when used as a binder for mineral wool products.

Component (iv) of the binder

In a preferred embodiment, the binder composition according to the present invention further comprises a component (iv) in form of a carboxylic acid, in particular selected from monomeric polycarboxylic acids, polymeric polycarboxylic acids, monomeric monocarboxylic acids, and/or polymeric monocarboxylic acid, such as polyacrylic acid.
In a particularly preferred embodiment, the binder composition according to the present invention further comprises a component (iv) in form of a carboxylic acid, such as a monomeric polycarboxylic acid, preferably citric acid.
In a particular preferred embodiment, component (iv) is citric acid.

Component (v) of the binder

In a preferred non-claimed embodiment, the binder composition according to the present invention comprises a component (v) in form of one or more compounds selected from

- compounds of the formula, and any salts thereof:

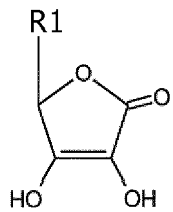

in which R1 corresponds to H, alkyl, monohydroxyalkyl, dihydroxyalkyl, polyhydroxyalkyl, alkylene, alkoxy, amine;

- compounds of the formula, and any salts thereof:

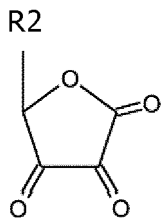

in which R2 corresponds to H, alkyl, monohydroxyalkyl, dihydroxyalkyl, polyhydroxyalkyl, alkylene, alkoxy, amine.
In a preferred embodiment, component (v) is selected from the group of L-ascorbic acid, D-isoascorbic acid, 5,6-isopropylidene ascorbic acid, dehydroascorbic acid and/or any salt of the compounds, preferably calcium, sodium, potassium, magnesium or iron salts.
In a particular preferred embodiment, component (v) is L-ascorbic acid.
Ascorbic acid, or vitamin C, is a non-toxic, naturally occurring organic compound with antioxidant properties, which can be produced from biomass. Ascorbic acid and its derivatives are therefore a product which is produced from renewable sources and can at the same time be obtained at a comparatively low price.

Component (vi) of the binder

Disclosed is that the binder composition further comprises a component (vi) in form of hypophosphorous acid.
The aqueous binder composition according to the present invention including component (vi) comprises

- component (i) in form of a glucose syrup having a DE of 60 to less than 100, in particular 60 to 99, more particular 85 to 99;
- component (ii) in form of sulfamic acid and/or its salts, preferably ammonium sulfamate and/or N-cyclohexyl sulfamic acid and/or its salts;
- component (iii) in form of ammonia;
- component (vi) in form of hypophosphorous acid.

The proportion of components (i), (ii), (iii) and (vi) is within the range of 0.5-15 wt.-%, in particular 1-12 wt.-%,

more particular 2-10 wt.-% component (ii), based on the mass of component (i), 0.5-10 wt.-%, in particular 1-8 wt.-%, more particular 1-5 wt.-% component (vi) based on the mass of component (i) and whereby component (iii) is preferably present in the amount of 0.1 to 5 molar equivalents of component (iii) relative to the combined molar equivalents of components (ii) and (vi).

Disclosed is that preferably component (ii) is in form of N-cyclohexyl sulfamic acid and/or any salt thereof.

It has surprisingly been found that by adding component (vi) to the aqueous binder composition, the properties of the aqueous binder composition can be strongly improved.

In particular, the present inventors have found that by including component (vi) in the binder composition, the temperature of curing onset and curing endset can be strongly reduced.

Component (vii) of the binder

In a preferred embodiment, the binder composition according to the present invention further comprises a component (vii) in the form of urea.

As can be seen in the experimental results reproduced in the examples below, the inclusion of urea decreases the curing onset and endset temperature while the reaction losses are only slightly increased. At the same time, the mechanical strength of a mineral wool product bonded by the binder according to the present invention comprising urea is retained at the same level as those of analogous binders without urea.

The inclusion of urea in the binder according to aspects of the present invention improves the fire resistance and anti-punking properties.

Component (viii) of the binder

In a preferred embodiment, the binder composition of the present invention further comprises a component (viii) in form of one or more fluorescent dye(s) being non-fluorescent after curing of the binder.

Preferably, the component (viii) is selected from the group consisting of

- one or more xanthenes, such as rhodamine 101 inner salt, sulforhodamine B, rhodamine B, rhodamine 6G, 2',7'-dichlorofluorescein, fluorescein sodium salt, rhodamine 110 chloride, eosin B, erythrosin B, eosin Y disodium salt;
- one or more pyrenes, such as pyranine;
- one or more diarylmethanes, such as auramine O;
- one or more acridines, such as acridine yellow G, acridine orange base;
- one or more triazenes, such as thiazole yellow G.

In a preferred embodiment, the component (viii) is in form of one or more xanthenes, in particular fluorescein sodium salt, in a concentration of 0.001 to 1 wt.-%, in particular 0.01 to 0.5, more particular 0.05 to 0.4 wt.-%, based on the binder solids.

The present inventors have found that by providing an aqueous curable binder composition comprising a fluorescent dye, the curing of the binder on the mineral wool product can be detected because the fluorescence of the binder material is influenced by the curing. Without wanting to be bound by any specific theory, it is assumed that the mechanism for the cease of fluorescence might, for example, be due to a decomposition of the dye or an incorporation of the dye into the curing binder.

For the purpose of the present invention, the term "cured or partly cured binder" refers to a binder which has at least been cured to a certain degree, e.g. by thermally treating in a curing apparatus, but has not necessarily been treated to achieve full curing in all regions of the product. Accordingly, the term "cured or partly cured binder" for the purpose of the present invention includes binders containing cured and uncured regions.

The aqueous binder composition according to the present invention including component (viii) allows for a surprisingly easy detection of the distribution of uncured binder by merely observing the presence or absence and/or the pattern of fluorescence on the surface of the mineral wool product and/or detecting a color change on the surface of the mineral wool product, e.g. by visual inspection. The distribution of uncured binder in or on the product can be detected within a wide time range after the production of the mineral wool product and it is possible to detect the distribution of uncured binder on a mineral wool product freshly made and just leaving the curing oven after cooling. Irregularities in the curing or anomalies of the binder distribution like the agglomeration of large amounts of binder in a single part of the mineral fibre product (called "chewing gums") can therefore immediately be detected and the production process can therefore be re-adjusted quickly, thereby minimizing the wastage of inadequate products. As a further advantage, the aqueous binder compositions according to the present invention including component (viii) allow such a detection in a non-destructive way.

Component (ix) of the binder

In a preferred embodiment, the binder composition of the present invention further comprises a component (ix) in the form of one or more reactive or nonreactive silicones.

Preferably, the component (ix) is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1-15 weight-%, preferably from 0.1-10 weight-%, more preferably 0.3-8 weight-%, based on the binder solids.

In a further disclosed binder composition, the binder composition consists essentially of

- a component (i) in form of a glucose syrup having a DE of 60 to less than 100, in particular of 60 to 99, more particular 85 to 99;
- a component (ii) in form of sulfamic acid and/or its salts, preferably ammonium sulfamate and/or N-cyclohexyl sulfamic acid and/or its salts;
- a component (iii) in form of ammonia;
- optionally a component (iv) in form of citric acid;
- optionally a component (v) in form of ascorbic acid;
- a component (vi) in form of hypophosphorous acid;
- optionally a component (vii) in the form of urea;
- optionally a component (viii) in form of fluorescein sodium salt;
- optionally a component (ix) selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition;
- optionally a component in the form of a silane;
- optionally an emulsified hydrocarbon oil;
- optionally a detergent;
- water.

Disclosed is that the aqueous binder composition does not contain a polycarboxylic acid.

Mineral fibre product

The present invention is also directed to a method of producing a bonded mineral fibre product which comprises the steps of contacting mineral fibres with a binder composition described above and curing the binder composition.

The present invention is also directed to a mineral fibre product, comprising mineral fibres in contact with the cured binder composition described above.

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product.

Suitable fibre formation methods and subsequent production steps for manufacturing the mineral fibre product are those conventional in the art. Generally, the binder is sprayed immediately after fibrillation of the mineral melt on to the air-borne mineral fibres.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, plaster boards, glass

surfacing mats and other woven or non-woven materials.

The mineral fibre products according to the present invention generally have a density within the range of from 6 to 250 kg/m$^3$, preferably 20 to 200 kg/m$^3$. The mineral fibre products generally have a loss on ignition (LOI) within the range of 0.1 to 18.0 %, preferably 0.2 to 8.0 % by weight.

Although the aqueous binder composition according to the present invention is particularly useful for bonding mineral fibres, it may equally be employed in other applications typical for binders and sizing agents, e.g. as a binder for foundry sand, chipboard, glass fibre tissue, cellulosic fibres, non-woven paper products, composites, moulded articles, coatings etc.

The following examples are intended to further illustrate the invention without limiting its scope.

## Examples

In the following examples, several binders which fall under the definition of the present invention were prepared and compared to binders according to the prior art.

The following properties were determined for the binders according to the present invention and the binders according to the prior art, respectively:

*Binder component solids content*

The content of each of the components in a given binder solution before curing is based on the anhydrous mass of the components.

Except for 28% aq. ammonia (Sigma Aldrich), 75 % aq. glucose syrup with a DEvalue of 95 to less than 100 (C*sweet D 02767 ex Cargill), and 50% aq. hypophosporous acid (Sigma Aldrich), all other components were supplied in high purity by Sigma-Aldrich and were assumed anhydrous for simplicity.

*Binder solids*

The content of binder after curing is termed "binder solids".

Disc-shaped stone wool samples (diameter: 5 cm; height 1 cm) were cut out of stone wool and heat-treated at 580 °C for at least 30 minutes to remove all organics. The binder solids of a given binder solution was measured by distributing two samples of the binder solution (each approx. 2 g) onto two of the heat treated stone wool discs which were weighed directly before and after application of the binder solution. The binder loaded stone wool discs were then heated at 200 °C for 1 hour. After cooling and storing at room temperature for 10 minutes, the samples were weighed and the binder solids was calculated as an average of the two results. A binder with a desired binder solids could then be produced by diluting with the required amount of water or water and 10% aq. silane (Momentive VS-142).

*Reaction loss*

The reaction loss is defined as the difference between the binder component solids content and the binder solids.

*Curing characteristics - DMA (dynamic mechanical analysis) measurements*

A 15% binder solids binder solution was obtained as described above. Cut and weighed glass Whatman™ glass microfiber filters (GF/B, 150 mm Ø, cat. no. 1821 150) (2.5×1 cm) were submerged into the binder solution for 10 seconds. The resulting binder-soaked filter was then dried in a "sandwich" consisting of (1) a 0.60 kg 8x8x1 cm metal plate, (2) four layers of standard filter papers, (3) the binder soaked glass microfiber filter, (4) four layers of standard filter papers, and (5) a 0.60 kg 8x8x1 cm metal plate for approximately 2x2 minutes by applying a weight of 3.21 kg on top of the "sandwich". In a typical experiment, the cut Whatman™ glass microfiber filter would weigh 0.035 g before application of the binder and 0.125 g after application and drying which corresponds to a binder solution loading of 72%. All DMA measurements were performed with 72±1% binder solution loadings.

The DMA measurements were acquired on a Mettler Toledo DMA 1 calibrated against a certified thermometer at ambient temperature and the melting points of certified indium and tin. The apparatus was operated in single cantilever bending mode; titanium clamps; clamp distance 1.0 cm; temperature segment type; temperature range 40-280 °C; heating rate 3 °C / min; displacement 20 μm; frequency 1 Hz; single frequency oscillation mode. Curing onset and endset were evaluated using STARe software Version 12.00.

*Mechanical strength studies*

The mechanical strength of the binders was tested in a tablet test. For each binder, four tablets were manufactured from a mixture of the binder and stone wool shots from the stone wool spinning production. The shots are particles which have the same melt composition as the stone wool fibres, and the shots are normally considered a waste product from the spinning process. The shots used for the tablet composition have a size of 0.25-0.50 mm.

A 15% binder solids binder solution containing 0.5-1% silane (Momentive VS-142) of binder solids was obtained as described above. Four samples of the binder solution (each 4.0 g) were then mixed well with four samples of shots (each 20.0 g). The resulting four mixtures were then transferred into four round aluminum foil containers (bottom Ø = 4.5 cm, top Ø = 7.5 cm, height = 1.5 cm). One by one, the mixtures were then pressed hard with a suitably sized flat bottom glass beaker to generate an even tablet surface. The resulting tablets were then cured at 250 °C for 1 h. After cooling to room temperature, the tablets were carefully taken out of the containers. Two of the four tablets were then submerged into a water bath at 80 °C for 3 h to simulate aging. After drying for 1-2 days, the tablets were manually broken in two halves whereby the capacity of the given binder to bind shots together could be evaluated. The binders were given the notes strong (***), medium (**), acceptable (*/**) or weak (*).

<u>Reference binders from the prior art prepared as comparative examples</u>

**Binder example, reference binder A**

A mixture of anhydrous citric acid (1.7 g, 8.84 mmol) and dextrose monohydrate (9.55 g; thus efficiently 8.68 g, 48.2 mmol dextrose) in water (26.3 g) was stirred at room temperature until a clear solution was obtained. 28% aq. ammonia (1.30 g; thus efficiently 0.36 g, 21.4 mmol ammonia) was then added dropwise (pH = 5.18. The binder solids was then measured (16.8%).

For DMA studies (15% binder solids solution), the binder mixture was diluted with water (0.121 g / g binder mixture). For mechanical strength studies (15% binder solids solution, 0.5% silane of binder solids), the binder mixture was diluted with water (0.113 g / g binder mixture) and 10% aq. silane (0.008 g / g binder mixture). The final binder mixture for mechanical strength studies had pH = 5.0.

**Binder example, reference binder B**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) ad 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (mL) with the amount of sample (mL):

$$AT = (\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

The binder solids was then measured as described above and the mixture was diluted with the required amount of water for DMA measurements (15% binder solids solution) or water and silane (15% binder solids solution, 0.5% silane of binder solids, Momentive VS-142) for mechanical strength measurements.

**Binder example, reference binder C**

This binder is based on alkanolamine-polycarboxylic acid anhydride reaction products.

Diethanolamine (DEA, 231.4 g) is placed in a 5-litre glass reactor provided with a stirrer and a heating/cooling jacket. The temperature of the diethanolamine is raised to 60 °C where after tetrahydrophthalic anhydride (THPA, 128.9 g) is added. After raising the temperature and keeping it at 130 °C, a second portion of tetrahydrophthalic anhydride (64.5 g) is added followed by trimellitic anhydride (TMA, 128.9 g). After reacting at 130 °C for 1 hour, the mixture is cooled to 95 °C. Water (190.8 g) is added and stirring is continued for 1 hour. After cooling to ambient temperature, the mixture is poured into water (3.40 kg) and 50% aq. hypophosphorous acid (9.6 g) and 25% aq. ammonia (107.9 g) are added under stirring. Glucose syrup (1.11 kg) is heated to 60 °C and then added under stirring followed by 50% aq. silane (Momentive VS-142) (5.0 g).

The binder solids was then measured as described above and the mixture was diluted with the required amount of water for DMA and mechanical strength measurements (15% binder solids solutions).

**Binder example, reference binder D**

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (Momentive VS-142) (5.0 g).

The binder solids was then measured as described above and the mixture was diluted with the required amount of water for DMA and mechanical strength measurements (15% binder solids solutions).

**Binder example, reference binder E**

A mixture of L-ascorbic acid (1.50 g, 8.52 mmol) and 75.1% aq. glucose syrup (18.0 g; thus efficiently 13.5 g glucose syrup) in water (30.5 g) was stirred at room temperature until a clear solution was obtained. 50% aq. hypophosphorous acid (1.50 g; thus efficiently 0.75 g, 11.4 mmol hypophosphorous acid) was then added (pH 1.2). 28% aq. ammonia (1.51 g; thus efficiently 0.42 g, 24.8 mmol ammonia) was then added dropwise until pH = 6.3. The binder solids was then measured (20.2%).

For DMA studies (15% binder solids solution), the binder mixture was diluted with water (0.347 g / g binder mixture). For mechanical strength studies (15% binder solids solution, 0.5% silane of binder solids), the binder mixture was diluted with water (0.337 g / g binder mixture) and 10% aq. silane (0.010 g / g binder mixture, Momentive VS-142). The final binder mixture for mechanical strength studies had pH = 6.4.

**Binder example, reference binder F**

A mixture of L-ascorbic acid (1.50 g, 8.52 mmol) and 75.1% aq. glucose syrup (18.0 g; thus efficiently 13.5 g glucose syrup) in water (30.5 g) was stirred at room temperature until a clear solution was obtained. 50% aq. hypophosphorous acid (0.60 g; thus efficiently 0.30 g, 4.55 mmol hypophosphorous acid) was then added (pH 1.3). 28% aq. ammonia (0.99 g; thus efficiently 0.28 g, 16.3 mmol ammonia) was then added dropwise until pH = 6.7. The binder solids was then measured (20.1%).

For DMA studies (15% binder solids solution), the binder mixture was diluted with water (0.341 g / g binder mixture). For mechanical strength studies (15% binder solids solution, 0.5% silane of binder solids), the binder mixture was diluted with water (0.331 g / g binder mixture) and 10% aq. silane (0.010 g / g binder mixture, Momentive VS-142). The final binder mixture for mechanical strength studies had pH = 6.4.

**Binder example, reference binder G**

A mixture of L-ascorbic acid (3.00 g, 17.0 mmol) and 75.1% aq. glucose syrup (16.0 g; thus efficiently 12.0 g glucose syrup) in water (31.0 g) was stirred at room temperature until a clear solution was obtained. 50% aq. hypophosphorous acid (0.60 g; thus efficiently 0.30 g, 4.55 mmol hypophosphorous acid) was then added (pH 1.2). 28% aq. ammonia (1.94 g; thus efficiently 0.54 g, 31.9 mmol ammonia) was then added dropwise until pH = 6.5. The binder solids was then measured (19.6%).

For DMA studies (15% binder solids solution), the binder mixture was diluted with water (0.306 g / g binder

mixture). For mechanical strength studies (15% binder solids solution, 0.5% silane of binder solids), the binder mixture was diluted with water (0.296 g / g binder mixture) and 10% aq. silane (0.010 g / g binder mixture, Momentive VS-142). The final binder mixture for mechanical strength studies had pH = 6.6.

Binder compositions according to the present invention

In the following, the entry numbers of the binder example correspond to the entry numbers used in Table 1.

*Binder example, entry 1 (not according to the invention)*

A mixture of xylose (15.0 g) and ammonium sulfamate (0.75 g, 6.57 mmol) in water (40.0 g) was stirred at room temperature until a clear solution was obtained (pH 4.3). 28% aq. ammonia (0.055 g; thus efficiently 0.02 g, 0.90 mmol ammonia) was then added dropwise until pH = 8.2. The binder solids was then measured (18.4%).

For DMA and mechanical strength studies (15% binder solids solution, 1.0% silane of binder solids), the binder mixture was diluted with water (0.210 g / g binder mixture) and 10% aq. silane (0.018 g / g binder mixture). The final binder mixture had pH = 6.8.

*Binder example, entry 4 (not according to the invention)*

A mixture of 75.1% aq. glucose syrup (20.0 g; thus efficiently 15.0 g glucose syrup) and ammonium sulfamate (0.75 g, 6.57 mmol) in water (35.0 g) was stirred at room temperature until a clear solution was obtained (pH 4.2). 28% aq. ammonia (0.069 g; thus efficiently 0.02 g, 1.13 mmol ammonia) was then added dropwise until pH = 8.1. The binder solids was then measured (19.0%).

For DMA and mechanical strength studies (15% binder solids solution, 1.0% silane of binder solids), the binder mixture was diluted with water (0.250 g / g binder mixture) and 10% aq. silane (0.019 g / g binder mixture). The final binder mixture had pH = 8.3.

*Binder example, entry 6 (not according to the invention)*

A mixture of 75.1% aq. glucose syrup (20.0 g; thus efficiently 15.0 g glucose syrup) and ammonium sulfamate (0.60 g, 5.26 mmol) in water (35.0 g) was stirred at room temperature until a clear solution was obtained (pH 4.2). The binder solids was then measured (19.3%).

For DMA and mechanical strength studies (15% binder solids solution, 0.5% silane of binder solids), the binder mixture was diluted with water (0.275 g / g binder mixture) and 10% aq. silane (0.010 g / g binder mixture). The final binder mixture had pH = 7.4.

*Binder example, entry 7 (not according to the invention)*

A mixture of 75.1% aq. glucose syrup (20.0 g; thus efficiently 15.0 g glucose syrup) and N-cyclohexyl sulfamic acid (1.50 g, 8.37 mmol) in water (35.0 g) was stirred at room temperature until a clear solution was obtained (pH 1.2). 28% aq. ammonia (0.65 g; thus efficiently 0.18 g, 10.7 mmol ammonia) was then added dropwise until pH = 7.8. The binder solids was then measured (20.9%).

For DMA and mechanical strength studies (15% binder solids solution, 1.0% silane of binder solids), the binder mixture was diluted with water (0.370 g / g binder mixture) and 10% aq. silane (0.021 g / g binder mixture). The final binder mixture had pH = 8.3.

*Binder example, entry 15 (not according to the invention)*

A mixture of 75.1% aq. glucose syrup (20.0 g; thus efficiently 15.0 g glucose syrup), ammonium sulfamate (0.75 g, 6.57 mmol) and urea (1.50 g) in water (35.0 g) was stirred at room temperature until a clear solution was obtained (pH 4.4). 28% aq. ammonia (0.035 g; thus efficiently 0.01 g, 0.58 mmol ammonia) was then added dropwise until pH = 8.0. The binder solids was then measured (21.1%).

For DMA and mechanical strength studies (15% binder solids solution, 1.0% silane of binder solids), the binder mixture was diluted with water (0.384 g / g binder mixture) and 10% aq. silane (0.021 g / g binder mixture). The final binder mixture had pH = 8.5.

*Binder example, entry 17 (not according to the invention)*

A mixture of 75.1% aq. glucose syrup (20.0 g; thus efficiently 15.0 g glucose syrup), urea (1.50 g) and N-cyclohexyl sulfamic acid (0.75 g, 4.18 mmol) in water (35.0 g) was stirred at room temperature until a clear solution was obtained (pH 1.2). 28% aq. ammonia (0.55 g; thus efficiently 0.15 g, 9.0 mmol ammonia) was then added dropwise until pH = 8.7. The binder solids was then measured (20.9%).

For DMA and mechanical strength studies (15% binder solids solution, 1.0% silane of binder solids), the binder mixture was diluted with water (0.371 g / g binder mixture) and 10% aq. silane (0.021 g / g binder mixture). The final binder mixture had pH = 9.0.

*Binder example, entry 19*

A mixture of 75.1% aq. glucose syrup (18.0 g; thus efficiently 13.5 g glucose syrup), ascorbic acid (1.50 g, 8.52 mmol), 50% hypophosphorous acid (0.60 g; thus efficiently 0.30 g, 4.55 mmol hypophosphorous acid) and ammonium sulfamate (0.75 g, 6.57 mmol) in water (30.5 g) was stirred at room temperature until a clear solution was obtained (pH 1.3). 28% aq. ammonia (1.17 g; thus efficiently 0.33 g, 19.2 mmol ammonia) was then added dropwise until pH = 6.4. The binder solids was then measured (21.0%).

For DMA and mechanical strength studies (15% binder solids solution, 0.5% silane of binder solids), the binder mixture was diluted with water (0.389 g / g binder mixture) and 10% aq. silane (0.011 g / g binder mixture). The final binder mixture had pH = 7.0.

*Binder example, entry 20 (not according to the invention)*

A mixture of 75.1% aq. glucose syrup (18.0 g; thus efficiently 13.5 g glucose syrup), ascorbic acid (1.50 g, 8.52 mmol) and ammonium sulfamate (0.90 g, 7.89 mmol) in water (30.5 g) was stirred at room temperature until a clear solution was obtained (pH 2.4). 28% aq. ammonia (0.64 g; thus efficiently 0.18 g, 10.5 mmol ammonia) was then added dropwise until pH = 6.5. The binder solids was then measured (22.6%).

For DMA and mechanical strength studies (15% binder solids solution, 0.5% silane of binder solids), the binder mixture was diluted with water (0.496 g / g binder mixture) and 10% aq. silane (0.011 g / g binder mixture). The final binder mixture had pH = 6.7.

*Binder example, entry 21 (not according to the invention)*

A mixture of 75.1% aq. glucose syrup (18.0 g; thus efficiently 13.5 g glucose syrup), ascorbic acid (1.50 g, 8.52 mmol) and N-cyclohexyl sulfamic acid (0.90 g, 5.02 mmol) in water (30.5 g) was stirred at room temperature until a clear solution was obtained (pH 0.9). 28% aq. ammonia (1.40 g; thus efficiently 0.39 g, 23.0 mmol ammonia) was then added dropwise until pH = 7.5. The binder solids was then measured (21.5%).

For DMA and mechanical strength studies (15% binder solids solution, 0.5% silane of binder solids), the binder mixture was diluted with water (0.419 g / g binder mixture) and 10% aq. silane (0.011 g / g binder mixture). The final binder mixture had pH = 7.2.

The other binders mentioned in Table 1 were prepared in a manner analogous to the preparation described above.

TABLE 1-1

| | Reference binders | | | | | | |
|---|---|---|---|---|---|---|---|
| **Example** | A | B | C | D | E | F | G |
| **Binder composition** | | | | | | | |
| | | | | | | | |
| Ascorb. acid or deriv. (%-wt.) | | | | | | | |
| L-Ascorbic acid | - | - | - | - | 10 | 10 | 20 |
| | | | | | | | |
| Carbohydrate (%-wt.) | | | | | | | |
| Glucose syrup | - | - | - | - | 90 | 90 | 80 |

(continued)

| | Reference binders | | | | | | |
|---|---|---|---|---|---|---|---|
| **Example** | A | B | C | D | E | F | G |
| **Binder composition** | | | | | | | |
| Xylose | - | - | - | - | - | - | - |
| Pan | - | - | - | - | - | - | - |
| Starch | - | - | - | - | - | - | - |
| | | | | | | | |
| Additive (%-wt.)[a] | | | | | | | |
| Urea | - | - | - | - | - | - | - |
| Hypophosphorous acid | - | - | - | - | 5 | 2 | 2 |
| Ammonium sulfate | - | - | - | - | - | - | - |
| Ammonium sulfamate | - | - | - | - | - | - | - |
| N-Cyclohexyl sulfamic acid | - | - | - | - | - | - | - |
| Sodium N-cyclohexyl sulfamate | - | - | - | - | - | - | - |
| | | | | | | | |
| Amine (equiv.) [b] | | | | | | | |
| Ammonia (added) | - | - | - | - | 1.2 | 1.2 | 1.5 |
| | | | | | | | |
| Silane (% of binder solids) | - | - | - | - | 0.5 | 0.5 | 0.5 |
| | | | | | | | |
| **Binder properties** | | | | | | | |
| Curing onset (°C) | 144 | 159 | 178 | 196 | 148 | 172 | 158 |
| Curing endset (°C) | 165 | 172 | 210 | 220 | 169 | 193 | 182 |
| Reaction loss (%) | 39.3 | 28.5 | 28.9 | 30.6 | 33.8 | 33.4 | 35.0 |
| pH of 15% soln. | 5.0 | 10.0 | 6.1 | 6.2 | 6.4 | 6.4 | 6.6 |
| Mechanical strength, unaged | *** | *** | *** | *** | *** | *** | *** |
| Mechanical strength, aged | ** | ** | *** | ** | ** | *** | ** |

[a] Of carbohydrate + ascorbic acid (or derivative). [b] Molar equivalents relative to additives (excl. urea) + ascorbic acid.

TABLE 1-2

| | Carbohydrate, sulfamic acid and/or derivatives, ammonia | | | | | | | | | | | | | Pan or starch, ammonium sulfamate | | |
|---|---|---|---|---|---|---|---|---|---|---|---|---|---|---|---|---|
| **Example** | 1[c] | E[c] | 2[c] | 3[c] | 4[c] | 5[c] | 6[c] | F[c] | 7[c] | 8[c] | 9[c] | 10[c] | 11[c] | 5[c] | 12[c] | 13[c] |
| **Binder composition** | | | | | | | | | | | | | | | | |
| | | | | | | | | | | | | | | | | |
| Ascorb. acid or deriv. (%-wt.) | | | | | | | | | | | | | | | | |
| L-Ascorbic acid | 0 | 10 | 0 | 0 | 0 | 0 | 0 | 10 | 0 | 0 | 0 | 0 | 0 | 0 | 0 | 0 |
| | | | | | | | | | | | | | | | | |
| Carbohydrate (%-wt.) | | | | | | | | | | | | | | | | |
| Glucose syrup | - | 90 | 100 | 100 | 100 | 100 | 100 | 90 | 100 | 100 | 100 | 100 | 100 | 100 | - | - |
| Xylose | 100 | - | - | - | - | - | - | - | - | - | - | - | - | - | - | - |
| Pan | - | - | - | - | - | - | - | - | - | - | - | - | - | - | 100 | - |
| Starch | - | - | - | - | - | - | - | - | - | - | - | - | - | - | - | 100 |
| | | | | | | | | | | | | | | | | |
| Additive (%-wt.)[a] | | | | | | | | | | | | | | | | |
| Urea | - | - | - | - | - | - | - | - | - | - | - | - | - | - | - | - |
| Hypophosphorous acid | - | 5 | - | - | - | - | - | 2 | - | 2 | - | - | - | - | - | - |
| Ammonium sulfate | - | - | 5 | 2.5 | - | - | - | - | - | - | - | - | - | - | - | - |
| Ammonium sulfamate | 5 | - | - | 2.5 | 5 | 5 | 4 | - | - | - | - | 2 | - | 5 | 5 | 5 |
| N-Cyclohexyl sulfamic acid | - | - | - | - | - | - | - | - | 10 | - | 5 | - | - | - | - | - |
| Sodium N-cyclohexyl sulfamate | - | - | - | - | - | - | - | - | - | - | - | - | 5 | - | - | - |
| | | | | | | | | | | | | | | | | |
| Amine (equiv.) [b] | | | | | | | | | | | | | | | | |
| Ammonia (added) | 0.1 | 1.2 | - | - | 0.2 | - | - | 1.2 | 1.3 | 1.7 | 2.7 | - | - | - | - | - |
| | | | | | | | | | | | | | | | | |
| Silane (% of binder solids) | 1.0 | 0.5 | 0.5 | 0.5 | 1.0 | 0.5 | 0.5 | 0.5 | 1.0 | 0.5 | 1.0 | 0.5 | 1.0 | 0.5 | 0.5 | 0.5 |

(continued)

| | Carbohydrate, sulfamic acid and/or derivatives, ammonia | | | | | | | | | | | | | Pan or starch, ammonium sulfamate | | |
|---|---|---|---|---|---|---|---|---|---|---|---|---|---|---|---|---|
| **Example** | 1[c] | E[c] | 2[c] | 3[c] | 4[c] | 5[c] | 6[c] | F[c] | 7[c] | 8[c] | 9[c] | 10[c] | 11[c] | 5[c] | 12[c] | 13[c] |
| **Binder composition** | | | | | | | | | | | | | | | | |
| | | | | | | | | | | | | | | | | |
| **Binder properties** | | | | | | | | | | | | | | | | |
| Curing onset (°C) | 143 | 148 | 156 | 158 | 165 | 168 | 170 | 172 | 176 | 205 | 205 | 214 | 219 | 168 | 219 | - |
| Curing endset (°C) | 160 | 169 | 174 | 175 | 182 | 187 | 193 | 193 | 193 | 236 | 253 | 258 | 246 | 187 | 230 | - |
| Reaction loss (%) | 34.8 | 33.8 | 32.3 | 32.4 | 32.6 | 31.7 | 31.3 | 33.4 | 28.5 | 28.0 | 27.2 | 26.1 | 34.2 | 31.7 | 47.3 | 29.3 |
| pH of 15% soln. | 6.8 | 6.4 | 6.2 | 6.1 | 8.3 | 6.5 | 7.4 | 6.4 | 8.3 | 8.4 | 9.5 | 7.7 | 8.6 | 6.5 | 7.6 | 6.6 |
| Mechanical strength, unaged | *** | *** | *** | *** | *** | *** | *** | *** | *** | *** | *** | *** | *** | *** | * | ** |
| Mechanical strength, aged | ** | ** | ** | */** | ** | */** | ** | *** | ** | */** | ** | ** | ** | */** | * | * |

[a] Of carbohydrate + ascorbic acid (or derivative). [b] Molar equivalents relative to additives (excl. urea) + ascorbic acid.
[c] not according to the invention

TABLE 1-3

| | Glucose syrup, sulfamic acid and/or derivatives, urea, ammonia | | | | | | | Glucose syrup, ascorbic acid, sulfamic acid and/or derivatives, ammonia | | | | | | | | |
|---|---|---|---|---|---|---|---|---|---|---|---|---|---|---|---|---|
| **Example** | 14[c] | 4[c] | 15[c] | 16[c] | 17[c] | 18[c] | 10[c] | 19 | E[c] | 20[c] | F[c] | 21[c] | 22[c] | 23[c] | G[c] | 24[c] |
| **Binder composition** | | | | | | | | | | | | | | | | |
| | | | | | | | | | | | | | | | | |
| Ascorb. acid or deriv. (%-wt.) | | | | | | | | | | | | | | | | |
| L-Ascorbic acid | 0 | 0 | 0 | 0 | 0 | 0 | 0 | 10 | 10 | 10 | 10 | 10 | 10 | 10 | 20 | 20 |
| | | | | | | | | | | | | | | | | |
| Carbohydrate (%-wt.) | | | | | | | | | | | | | | | | |
| Glucose syrup | 100 | 100 | 100 | 100 | 100 | 100 | 100 | 90 | 90 | 90 | 90 | 90 | 90 | 90 | 80 | 80 |
| Xylose | - | - | - | - | | - | - | - | - | - | - | - | - | - | - | - |
| Pan | - | - | - | - | | - | - | - | - | - | - | - | - | - | - | - |
| Starch | - | - | - | - | | - | - | - | - | - | - | - | - | - | - | - |
| | | | | | | | | | | | | | | | | |
| Additive (%-wt.)[a] | | | | | | | | | | | | | | | | |
| Urea | 5 | - | 10 | 5 | 10 | 5 | - | - | - | - | - | - | - | - | - | - |
| Hypophosphorous acid | - | - | - | - | - | - | - | 2 | 5 | - | 2 | - | - | - | 2 | - |
| Ammonium sulfate | - | - | - | - | - | - | - | - | - | - | - | - | - | - | - | - |
| Ammonium sulfamate | 5 | 5 | 5 | 5 | - | 2 | 2 | 5 | - | 6 | - | - | 2 | - | - | 2 |
| N-Cyclohexyl sulfamic acid | - | - | - | - | 5 | - | - | - | - | - | - | 6 | - | - | - | - |
| Sodium N-cyclohexyl sulfamate | - | - | - | - | - | - | - | - | - | - | - | - | - | 6 | - | - |
| | | | | | | | | | | | | | | | | |
| Amine (equiv.)[b] | | | | | | | | | | | | | | | | |
| Ammonia (added) | - | 0.2 | 0.1 | 0.1 | 2.2 | - | - | 1.0 | 1.2 | 0.6 | 1.2 | 1.7 | 1.0 | 1.1 | 1.5 | 1.2 |
| | | | | | | | | | | | | | | | | |
| Silane (% of binder solids) | 0.5 | 1.0 | 1.0 | 1.0 | 1.0 | 0.5 | 0.5 | 0.5 | 0.5 | 0.5 | 0.5 | 0.5 | 0.5 | 0.5 | 0.5 | 0.5 |

(continued)

| | Glucose syrup, sulfamic acid and/or derivatives, urea, ammonia | | | | | | | Glucose syrup, ascorbic acid, sulfamic acid and/or derivatives, ammonia | | | | | | | | | |
|---|---|---|---|---|---|---|---|---|---|---|---|---|---|---|---|---|---|
| **Example** | 14[c] | 4[c] | 15[c] | 16[c] | 17[c] | 18[c] | 10[c] | 19 | E[c] | 20[c] | F[c] | 21[c] | 22[c] | 23[c] | G[c] | 24[c] |
| **Binder composition** | | | | | | | | | | | | | | | | |
| | | | | | | | | | | | | | | | | |
| **Binder properties** | | | | | | | | | | | | | | | | |
| Curing onset (°C) | 162 | 165 | 167 | 170 | 190 | 199 | 214 | 148 | 148 | 162 | 172 | 179 | 189 | 197 | 158 | 168 |
| Curing endset (°C) | 183 | 182 | 190 | 191 | 212 | 219 | 258 | 163 | 169 | 180 | 193 | 196 | 209 | 217 | 182 | 192 |
| Reaction loss (%) | 32.5 | 32.6 | 30.0 | 29.1 | 30.6 | 27.1 | 26.1 | 32.7 | 33.8 | 27.5 | 33.4 | 31.1 | 27.1 | 34.6 | 35.0 | 33.8 |
| pH of 15% soln. | 7.5 | 8.3 | 8.5 | 8.7 | 9.0 | 7.9 | 7.7 | 7.0 | 6.4 | 6.7 | 6.4 | 7.2 | 6.9 | 7.0 | 6.6 | 8.3 |
| Mechanical strength, unaged | *** | *** | *** | *** | *** | *** | *** | ** | *** | ** | *** | *** | *** | *** | *** | *** |
| Mechanical strength, aged | */** | ** | ** | ** | ** | *** | ** | ** | ** | ** | *** | ** | *** | *** | ** | ** |

[a] Of carbohydrate + ascorbic acid (or derivative). [b] Molar equivalents relative to additives (excl. urea) + ascorbic acid.
[c] not according to the invention

## Claims

1. An aqueous binder composition for mineral fibers comprising:

    - a component (i) in form of a glucose syrup having a DE of 60 to less than 100, in particular 60 to 99, more particular 85 to 99;
    - a component (ii) in form of sulfamic acid and/or its salts, preferably ammonium sulfamate and/or N-cyclohexyl sulfamic acid and/or its salts;
    - ammonia;
    - hypophosphorous acid;

    wherein the proportion of components (i), (ii), ammonia and hypophosphorous acid is in within the range of 0.5-15 wt.-%, in particular 1-12 wt.-%, more particular 2-10 wt.-% component (ii), based on the mass of component (i), 0.5-10 wt.-%, in particular 1-8 wt.-%, more particular 1-5 wt.-% hypophosphorous acid, based on the mass of component (i), and whereby component ammonia is preferably present in the amount of 0.1 to 5 molar equivalents of ammonia relative to the combined molar equivalents of component (ii) and hypophosphorous acid.

2. An aqueous binder according to any one of the preceding claims, wherein component (ii) is selected from the group consisting of ammonium sulfamate, calcium sulfamate, sodium sulfamate, potassium sulfamate, magnesium sulfamate, cobalt sulfamate, nickel sulfamate, sodium N-cyclohexyl sulfamate.

3. An aqueous binder composition according to any one of the preceding claims, wherein the aqueous binder composition further comprises a carboxylic acid, such as a monomeric polycarboxylic acid, preferably citric acid.

4. An aqueous binder composition according to any one of the preceding claims, whereby the aqueous binder composition further comprises urea.

5. A method of producing a bonded mineral fiber product which comprises the steps of contacting the mineral fibers with a binder composition according to any one of the claims 1 to 4, and curing the binder composition.

6. Mineral fiber product, comprising mineral fibers in contact with the cured binder composition according to any one of the claims 1 to 4.

## Patentansprüche

1. Wässrige Bindemittelzusammensetzung für Mineralfasern, umfassend:

    - eine Komponente (i) in Form eines Glucosesirups mit einem DE von 60 bis weniger als 100, bevorzugt von 60 bis 99, insbesondere von 85 bis 99;
    - eine Komponente (ii) in Form von Sulfaminsäure und/oder deren Salzen, bevorzugt Ammoniumsulfamat und/oder N-Cyclohexylsulfaminsäure und/oder deren Salzen;
    - Ammoniak;
    - hypophosphorige Säure;

    wobei der Anteil der Komponenten (i), (ii), Ammoniak und hypophosphorige Säure im Bereich von 0,5-15 Gew.-%, bevorzugt 1-12 Gew.-%, insbesondere 2-10 Gew.-%, Komponente (ii), bezogen auf die Masse der Komponenten (i), 0,5-10 Gew.-%, bevorzugt 1-8 Gew.-%, insbesondere 1-5 Gew.-%, hypophosphorige Säure, bezogen auf die Masse der Komponenten (i), liegt und wobei die Komponente Ammoniak vorzugweise in der Menge von 0,1 bis 5 Moläquivalenten Ammoniak relativ zu den kombinierten Moläquivalenten der Komponente (ii) und der hypophosphorigen Säure vorliegt.

2. Wässriges Bindemittel nach irgendeinem der vorhergehenden Ansprüche, wobei Komponente (ii) ausgewählt ist aus der Gruppe bestehend aus Ammoniumsulfamat, Calciumsulfamat, Natriumsulfamat, Kaliumsulfamat, Magnesiumsulfamat, Cobaltsulfamat Nickelsulfamat, Natrium-N-cyclohexylsulfamat.

3. Wässrige Bindemittelzusammensetzung nach irgendeinem der vorhergehenden Ansprüche, wobei die wässrige Bindemittelzusammensetzung ferner eine Carbonsäure, wie z.B. eine monomere Polycarbonsäure, vorzugsweise Citronensäure, umfasst.

4. Wässrige Bindemittelzusammensetzung nach irgendeinem der vorhergehenden Ansprüche, wobei die wässrige Bindemittelzusammensetzung ferner Harnstoff umfasst.

5. Verfahren zur Herstellung eines gebundenen Mineralfaserprodukts, welches die Schritte des Inkontaktbringens der Mineralfasern mit einer Bindemittelzusammensetzung nach irgendeinem der Ansprüche 1 bis 4 und des Härtens der Bindemittelzusammensetzung umfasst.

6. Mineralfaserprodukt, umfassend Mineralfasern in Kontakt mit der gehärteten Bindemittelzusammensetzung nach irgendeinem der Ansprüche 1 bis 4.

**Revendications**

1. Composition de liant aqueux pour fibres minérales comprenant :

    - un composant (i) sous forme d’un sirop de glucose ayant un équivalent en dextrose de 60 à moins de 100, en particulier de 60 à 99, plus particulièrement de 85 à 99 ;
    - un composant (ii) sous forme d’acide sulfamique et/ou de ses sels, de préférence le sulfamate d’ammonium et/ou l’acide N-cyclohexylsulfamique et/ou ses sels ;
    - de l’ammoniac ;
    - de l’acide hypophosphoreux ;

   dans laquelle la proportion des composants (i), (ii), de l’ammoniac et de l’acide hypophosphoreux est située dans la plage allant de 0,5 à 15 % en poids, en particulier de 1 à 12 % en poids, plus particulièrement de 2 à 10 % en poids de composant (ii), par rapport à la masse du composant (i), de 0,5 à 10 % en poids, en particulier de 1 à 8 % en poids, plus particulièrement de 1 à 5 % en poids d’acide hypophosphoreux, par rapport à la masse du composant (i), et le composant ammoniac est de préférence présent en une quantité de 0,1 à 5 équivalents molaires d’ammoniac par rapport aux équivalents molaires combinés du composant (ii) et de l’acide hypophosphoreux.

2. Liant aqueux selon la revendication précédente, dans lequel le composant (ii) est choisi dans le groupe constitué par le sulfamate d’ammonium, le sulfamate de calcium, le sulfamate de sodium, le sulfamate de potassium, le sulfamate de magnésium, le sulfamate de cobalt, le sulfamate de nickel, le N-cyclohexylsulfamate de sodium.

3. Composition de liant aqueux selon l’une quelconque des revendications précédentes, laquelle composition de liant aqueux comprend en outre un acide carboxylique, tel qu’un acide polycarboxylique monomère, de préférence l’acide citrique.

4. Composition de liant aqueux selon l’une quelconque des revendications précédentes, laquelle composition de liant aqueux comprend en outre de l’urée.

5. Procédé de production d’un produit en fibres minérales liées, qui comprend les étapes de mise en contact des fibres minérales avec une composition de liant selon l’une quelconque des revendications 1 à 4, et de durcissement de la composition de liant.

6. Produit en fibres minérales, comprenant des fibres minérales en contact avec la composition de liant durcie selon l’une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A
- US 2011101260 A1
- WO 2013179323 A1
- US 2012319029 A1
- WO 2011044490 A1
- US 5100802 A
- WO 2010106181 A1
- WO 2012010694 A1
- WO 2008084173 A2